# EUROPEAN PATENT SPECIFICATION

(11) **EP 4 395 005 B1**
(45) Date of publication and mention of the grant of the patent: **10.12.2025**
(21) Application number: 22932489.2
(22) Date of filing: 22.12.2022
(51) Int. Cl.: H01M 10/613, H01M 10/617, H01M 10/6556, H01M 10/6557, H01M 10/658

(54) **ENERGY STORAGE DEVICE**
ENERGIESPEICHERVORRICHTUNG
DISPOSITIF DE STOCKAGE D'ÉNERGIE

(30) Priority: 17.11.2022 CN 202211438939
(43) Date of publication of application: 03.07.2024
(73) Proprietor: Hithium Tech HK Limited, Hong Kong (HK)
(72) Inventor: HUO, Qiqi, Xiamen, Fujian 361006 (CN)
(74) Representative: Santarelli
(86) International application number: PCT/CN2022/141103
(87) International publication number: WO 2024/103487

(56) References cited:
- CN-A- 110 048 184
- CN-A- 111 564 589
- CN-U- 205 900 748
- CN-U- 207 381 452
- CN-U- 210 984 801
- CN-U- 215 771 323
- CN-U- 216 793 847
- DE-A1- 102020 121 498
- KR-U- 19990 038 740

## Description

### TECHNICAL FIELD

The disclosure relates to the field of battery technology, in particular to an energy storage device.

### BACKGROUND

In the related art, multiple battery modules are arranged in an energy storage device, and a cooling assembly may be arranged between adjacent battery modules. With the cooling assembly arranged at a side of the battery modules, the battery modules may be cooled.

However, in order to fix the cooling assembly at a side of the battery modules, an end of the cooling assembly is usually fixed to a side board of a battery module. Therefore, heat transfer may occur between the cooling assembly and the side board, and between the side board and a battery box in contact with the side board, which not only affects the heat dissipation efficiency of the cooling assembly to the battery module, but also leads to inconsistent temperature between cells near the side board and cells in other areas of the battery module, and leads to large temperature difference in the battery module.
CN215771323U relates to a battery pack and a vehicle. The battery pack comprises a battery module; the tray comprises a first bottom plate, a second bottom plate and a frame, the frame and the first bottom plate define a first accommodating cavity for accommodating the battery module, the second bottom plate is arranged below the first bottom plate at an interval, and the battery module is fixedly connected with the frame. Therefore, the battery module is connected with the frame, and the frame is used as a main bearing part of the battery module, so that the requirement on the bearing force of the bottom plate can be reduced, the thickness of the bottom plate is reduced, and the weight and the cost are reduced; meanwhile, the first bottom plate and the second bottom plate are arranged, the thickness of a single-layer plate can be reduced, the cost can be reduced, and a gap is formed between the two bottom plates, so that the heat insulation and heat preservation effects can be achieved, and the mechanical strength is improved.
DE 10 2020 121498 A1 relates to an energy storage device for storing electrical energy, preferably for an at least partially electrically driven vehicle. The invention further relates to a method for producing an energy storage device and to a vehicle, preferably a utility vehicle, or to a stationary device having such an energy storage device. The energy storage device (1) has a plurality of storage cells (3, 4, 5) arranged next to one another in a stack-like manner and a cooling device (6) for cooling the storage cells (3, 4, 5). The cooling device (6) has a cooling plate (7) through which a coolant can flow and which is arranged laterally, preferably on the bottom side, with respect to the storage cells (3, 4, 5). The invention is distinguished in that the cooling device further has at least one heat sink (8) through which the coolant can flow and which is arranged between two adjacent storage cells (3, 4, 5) for cooling side surfaces of the storage cells (3, 4, 5), is fluidically connected to the cooling plate (7) and is designed as a heat sink (8) with an elastic shell (9).

### SUMMARY

The disclosure aims to solve at least one of the technical problems existing in the related art. The disclosure aims to provide an energy storage device, with more even temperature distribution in a battery module in the energy storage device, and higher cooling efficiency of a cooling assembly in the energy storage device.

In the first aspect of the disclosure, the energy storage device includes the features of claim 1.

According to the energy storage device in embodiments of the disclosure, by arranging the heat insulation support, heat exchange between the cooling assembly and the case may be reduced while the cooling assembly is fixed. On one hand, cooling effect and cooling efficiency of the cooling assembly may be improved. On the other hand, temperature in certain areas of the case will not be too low, and condensation on the case may be avoided. Therefore, the safety is improved, temperature in certain areas of battery modules will be prevented from getting too low, and temperature in multiple battery cells in a single battery module and temperature in multiple battery modules may be more even.

By increasing fixing stability of the at least one heat insulation support on the case, fixing stability of the at least one cooling assembly on the at least one heat insulation support may be increased. At the same time, the at least one cooling assembly may be separated from the side board, to further reduce heat exchange between the case and the cooling assembly.

By arranging the at least one heat insulation support, on one hand, the heat insulation support may serve as a triangular support to increase fixing stability and reliability of the cooling assembly on the case. On the other hand, heat exchange between the side board and the at least one cooling assembly may be reduced, so that cooling effect and cooling efficiency of the cooling assembly may be improved. At the same time, temperature in certain areas of the case will be prevented from getting too low. Therefore, temperature in the battery module is ensured to be even, which avoids large temperature difference in the battery module, and improves working stability and the safety of the energy storage device.

Further, the fixing segment has a positioning protrusion at bottom of the fixing segment, the longitudinal beam defines a positioning hole, and the positioning protrusion is inserted into the positioning hole. Fixing stability and reliability of the heat insulation support in the case may be further improved.

Further, the fixing groove has openings on one side of the fixing groove away from the connecting segment and on top of the fixing groove, for insertion of a cooling assembly, which makes the installation more convenient.

Optionally, the fixing groove has chamfers at the openings for assembly guidance, further improving installation convenience of the cooling assembly on the insulation support.

In some embodiments, groove walls of the fixing groove on two sides of the cooling assembly are equal in thickness. Therefore, force distribution on two sides of the heat insulation support in the width direction is more even, which improves fixing stability, and the structural strength and stability of the heat insulation support.

According to embodiments of the disclosure, the limiting segment includes a main part, a first reinforcing plate, and two second reinforcing plates. The main part is located between the cross beam and the side board of the case. Two ends of the main part abut against the cross beam and the side board respectively. The main part is perpendicular to the connecting segment. The first reinforcing plate is arranged on the main part. The first reinforcing plate is connected to the connecting segment and coplanar with the connecting segment. The two second reinforcing plates are arranged on two sides of the first reinforcing plate respectively. The two second reinforcing plates each are perpendicular to the first reinforcing plate. The two reinforcing plates are arranged symmetrically with respect to the first reinforcing plate.

Therefore, the structural strength of the heat insulation support may be improved, stability and reliability of the limiting segment on the baseboard may also be further improved.

According to embodiments of the disclosure, the at least one cooling assembly each has at least one end in the length direction of the battery modules fixed in at least one fixing groove of at least one heat insulation support. Then the at least one cooling assembly may be fixed in the case in a stable and reliable way by the at least one heat insulation support.

Further, the energy storage device includes multiple cooling assemblies, each of the multiple cooling assemblies is arranged between two adjacent battery modules. The energy storage device includes multiple heat insulation supports. Each of the multiple cooling assemblies is provided with a heat insulation support on each of two ends of each of the multiple cooling assemblies in the length direction of the multiple battery modules. Two ends of each of the multiple cooling assemblies in the length direction of the multiple battery modules are fixed in fixing grooves of heat insulation supports respectively.

Further, the energy storage device includes multiple cooling assemblies. A bus plate is arranged on the same end of the multiple cooling assemblies in the length direction of the battery modules, and the multiple cooling assemblies are connected to one another through the bus plate.

Optionally, the fixing segment, the connecting segment, and the limiting segment are integrally formed.

Additional aspects and advantages of the disclosure will be set forth in part in the following description, which will become apparent in the following description or will be understood through the practice of the disclosure.

### BRIEF DESCRIPTION OF THE DRAWINGS

The above and/or additional aspects and advantages of the disclosure will become apparent and easy to understand from description of embodiments in conjunction with the following accompany drawings.
FIG. 1 is a schematic view of an energy storage device provided in embodiments of the disclosure.
FIG. 2 is a schematic view of an energy storage device provided in other embodiments of the disclosure (with the case being not illustrated).
FIG. 3 is a schematic view illustrating cooperation of a cooling assembly and a case of an energy storage device provided in embodiments of the disclosure.
FIG. 4 is a schematic view illustrating cooperation of a heat insulation support, a case, and a cooling assembly of an energy storage device provided in embodiments of the disclosure.
FIG. 5 is a schematic view illustrating cooperation of a heat insulation support, a case, and a cooling assembly of an energy storage device provided in embodiments of the disclosure.
FIG. 6 is a schematic view illustrating cooperation of a heat insulation support and a cooling assembly of an energy storage device provided in embodiments of the disclosure.
FIG. 7 is a schematic view of an insulating plate of an energy storage device provided in embodiments of the disclosure.
FIG. 8 is a schematic view of a heat insulation support of an energy storage device provided in embodiments of the disclosure.

Explanation of reference signs:
100-energy storage device; 10-case; 11-baseboard; 111-cross beam; 112-longitudinal beam; 1121-positioning hole; 12-side board; 20-battery module; 30-cooling assembly; 40-heat insulation support; 41-fixing segment; 411-fixing groove; 412-positioning protrusion; 413-chamfer; 42-limiting segment; 421-main part; 422-first reinforcing plate; 423-second reinforcing plate; 43-connecting segment; 50-bus plate.

### DETAILED DESCRIPTION

The following will describe embodiments of the present disclosure in detail, and examples of embodiments herein will be illustrated in the accompanying drawings, in which the same or similar reference numerals denote the same or similar components or components having the same or similar functions throughout the context. Embodiments described hereinafter with reference to the accompanying drawings are illustrative and intended for explaining, rather than limiting, the present disclosure.

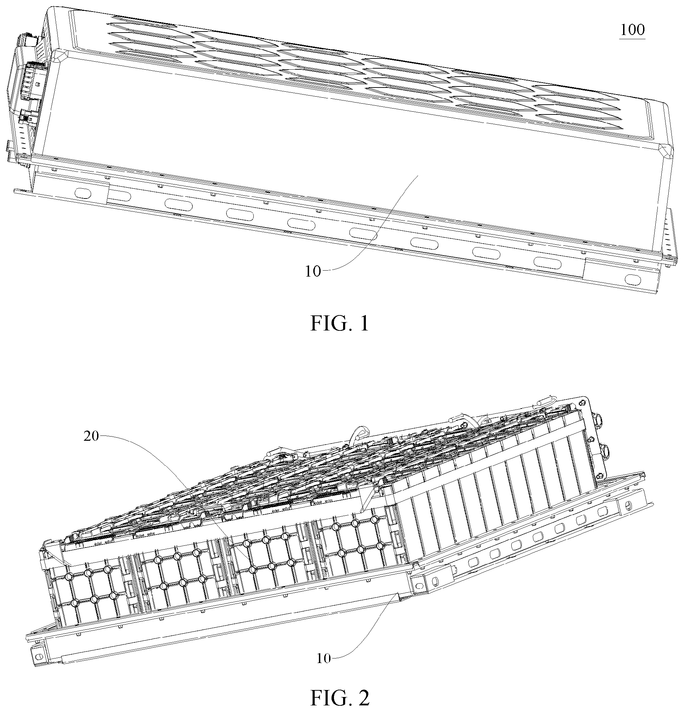

The following will describe an energy storage device 100 and an electric device provided in embodiments of the disclosure with reference from FIG. 1 to FIG. 8.

As illustrated in FIG. 1, FIG. 2, FIG. 3, FIG. 4, and FIG. 5, the energy storage device 100 provided in the first aspect of embodiments of the disclosure includes a case 10, multiple battery modules 20, at least one cooling assembly 30, and at least one heat insulation support 40.

The multiple battery modules 20 are arranged in the case 10. The multiple battery modules 20 are arranged successively in a width direction of the case 10. The at least one cooling assembly 30 is arranged between the multiple battery modules 20 and each is located at a side of the battery module 20. Two sides of the cooling assembly 30 may cool two adjacent battery modules 20 to increase the cooling efficiency. The at least one heat insulation support 40 is fixedly connected to the case 10. The heat insulation support 40 each defines a fixing groove 411 configured to fix one of the at least one cooling assembly 30. The cooling assembly 30 may be fixed by the heat insulation support 40, thus increasing stability and reliability of the cooling assembly 30 in the case 10. Heat exchange between the case 10 and the cooling assembly 30 may be reduced by the heat insulation support 40, so that heat insulation may be more effective and the loss of cold energy of the cooling assembly 30 may be reduced, which improves cooling efficiency and cooling effect. In addition, temperature in the case 10 will not be too low, which avoids temperature in certain areas of the battery modules 20 from getting lower than other areas, thus achieving better evenness of temperature in the battery modules 20.

According to the energy storage device 100 in embodiments of the disclosure, by arranging the heat insulation support 40, heat exchange between the cooling assembly 30 and the case 10 may be reduced while the cooling assembly 30 is fixed. On one hand, cooling effect and cooling efficiency of the cooling assembly 30 may be improved. On the other hand, temperature in certain areas of the case 10 will be prevented from getting too low, thus avoiding condensation on the case 10. Therefore, not only the safety may be improved, but also temperature in certain areas of battery modules 20 will not be too low, resulting in that temperature in multiple batteries of a single battery module 20 and temperature in multiple battery modules 20 may be more even.

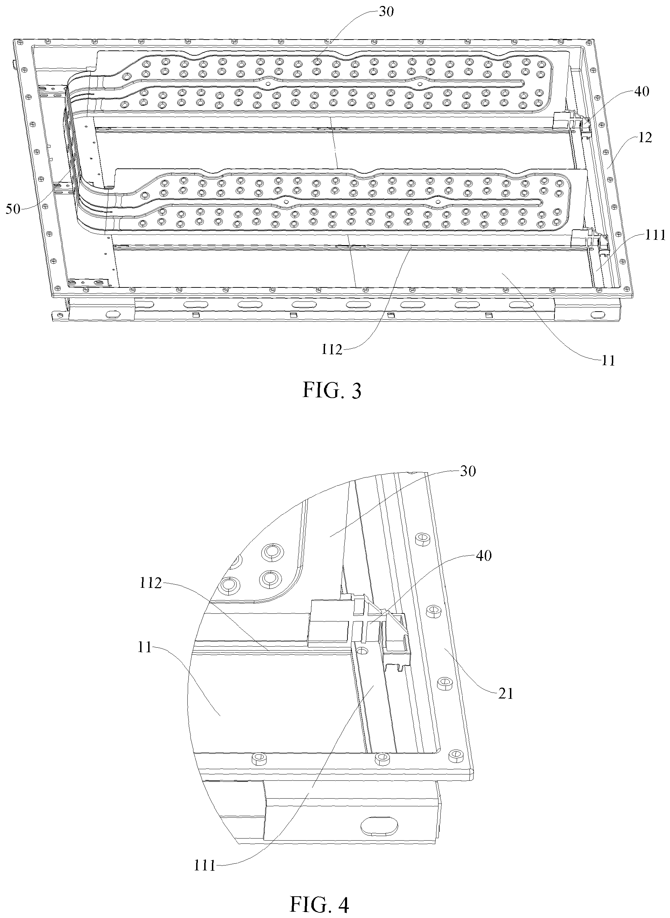

As illustrated in FIG. 3, FIG. 5, and FIG. 7. The case 10 includes a baseboard 11 and a side board 12. The baseboard 11 has a cross beam 111 and a longitudinal beam 112 perpendicular to the cross beam 111. The longitudinal beam 112 is parallel to a length direction of the battery modules 20, and the cross beam 111 is parallel to a width direction of the battery modules 20. The baseboard 11 and the side board 12 cooperatively form the case 10. The at least one heat insulation support 40 is arranged on the cross beam 111 and the longitudinal beam 112.

Specifically, the longitudinal beam 112 extends in the length direction of the battery modules 20, and the cross beam 111 extends in the width direction of the battery modules 20. The longitudinal beam 112 and the cross beam 111 cooperatively define an accommodating space, and a battery module 20 may be arranged in each accommodating space. The battery modules 20 are fixed to the cross beam 111 and the longitudinal beam 112, and the at least one heat insulation support 40 is disposed on the cross beam 111 and the longitudinal beam 112. Fixing stability of the cooling assembly 30 on the heat insulation support 40 may be improved by improving fixing stability of the heat insulation 40 in the case 10. At the same time, the cooling assembly 30 and the side board 12 may be spaced apart to further reduce heat exchange between the case 10 and the cooling assembly 30.

According to embodiments of the disclosure, the heat insulation support 40 includes a fixing segment 41, a limiting segment 42, and a connecting segment 43. The fixing segment 41 is located at one side of the cross beam 111 and is fixed to the longitudinal beam 112. The fixing groove 411 is defined on top of the fixing segment 41. The limiting segment 42 is located at the other side of the cross beam 111. Two ends of the connecting segment 43 are connected to the fixing segment 41 and the limiting segment 42 respectively, and the connecting segment 43 is supported by the cross beam 111.

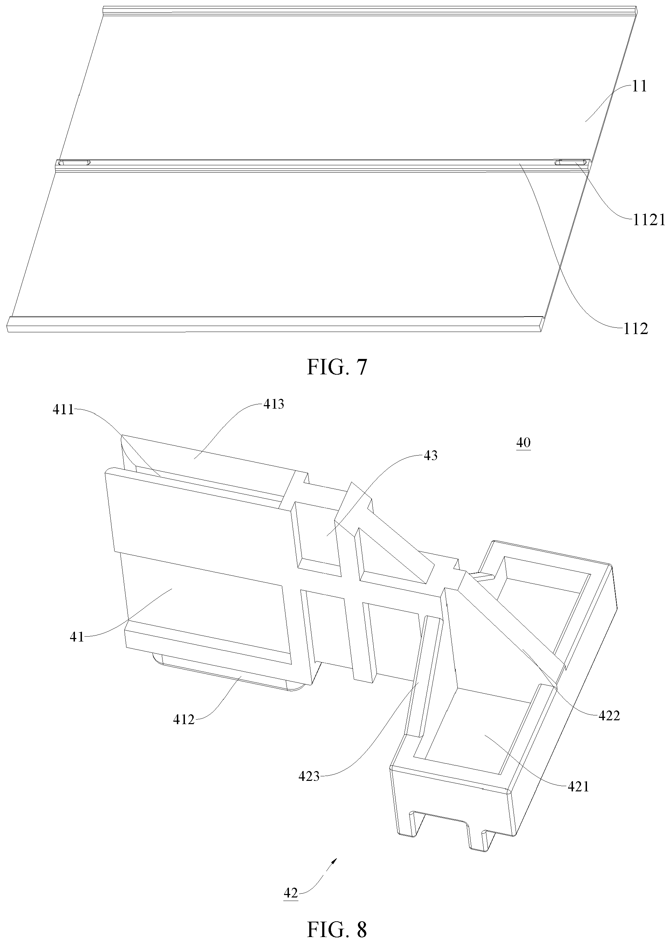

Specifically, as illustrated in FIG. 4 and FIG. 8, the heat insulation support 40 includes the connecting segment 43, the fixing segment 41, and limiting segment 42. The fixing segment 41 and the limiting segment 42 are located at two ends of the connecting segment 43. The fixing segment 41 extends in the length direction of the case 10. The limiting segment 42 extends in the width direction of the case 10. The fixing segment 41 and the limiting segment 42 each are fixed to the baseboard 11 of the case 10. The fixing segment 42 abuts against the side board 12 of the case 10, separating the side board 12 of the case 10 from the cooling assembly 30.

The projection of the heat insulation support 40 in a height direction may be T-shaped or cross-shaped, then a three-point support or a four-point support for the heat insulation support 40 in the case 10 may be realized by the fixing segment 41 and the limiting segment 42. The fixing stability and reliability of the cooling assembly 30 on the heat insulation support 40 may be improved by improving fixing stability and reliability of the heat insulation 40 in the case 10.

While the limiting segment 42 is fixed on the baseboard 11, at least part of the limiting segment 42 extends to the side board 12 of the case 10 in the length direction of the case 10, and abuts against the side board 12.

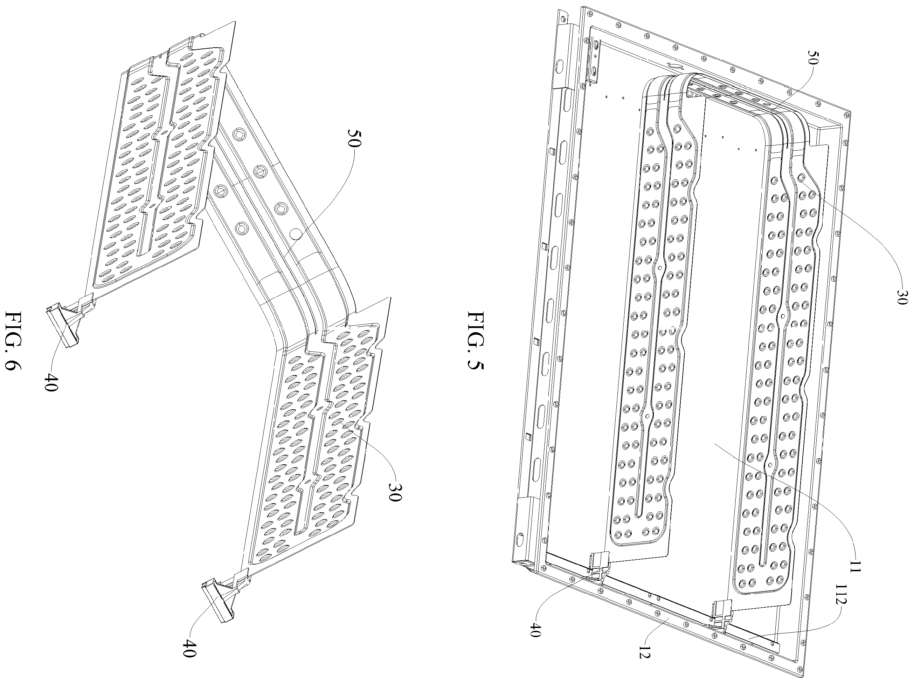

As illustrated in FIG. 4 and FIG. 5, the fixing segment 41 is located at one side of a cross beam 111, and the limiting segment 42 is located at the other side of the cross beam 111.

Specifically, the cross beam 111 is arranged on the baseboard 11 and extends in the width direction of the case 10. The cross beam 111 is separated from the side board 12 in the length direction of the case 10. The battery modules 20 are arranged in the case 10, and an end of each of the battery modules 20 is fixed to the cross beam 111 to increase the fixing stability of the battery modules 20 in the case 10. The connecting segment 43 is constructed as a plate, and extends in the length direction of the case 10 to cross the cross beam 111, i.e. facing the cross beam 111 in the height direction of the case 10. The fixing segment 41 and the limiting segment 42 are located at two sides of the cross beam 111. The fixing segment 41 and the limiting segment 42 located at two ends of the cross beam 111 are connected to the baseboard 11. The heat insulation support 40 may be limited by the cross beam 111, so as to avoid the movement of the heat insulating support 40 in the length direction of the case 10, and to improve fixing stability and reliability of the heat insulation support 40 and the cooling assembly 30 in the case 10.

According to the energy storage device 100 provided in embodiments of the disclosure, the heat insulation support 40 is arranged. On one hand, the heat insulation support 40 may serve as a triangular support, so that fixing stability and reliability of the cooling assembly 30 in the case 10 may be increased. On the other hand, heat exchange between the side board 12 and the cooling assembly 30 may be reduced, so that cooling effect and cooling efficiency of the cooling assembly 30 may be improved, and at the same time, temperature in certain areas of the case 10 will not be too low. Therefore, temperature in the battery module 20 is ensured to be even, which avoids large temperature difference in the battery module 20, and improves working stability and the safety of the energy storage device 100.

It may be noted that, the heat insulation support 40 is made of insulating material, which reduces heat exchange between the side board 12 and the cooling assembly 30, and at the same time has better insulation performance to meet the requirement of the electrical protection level of the energy storage device 100.

In embodiments illustrated in FIG. 3, FIG. 4, and FIG. 7, the fixing segment 41 has a positioning protrusion 412 at bottom of the fixing segment 41, and the longitudinal beam 112 defines a positioning hole 1121.

An insulating plate may be arranged between the baseboard 11 of the case 10 and the battery modules 20, and the insulating plate has the longitudinal beam 112. The positioning hole 1121 is defined on the insulating plate. Therefore, insulation between the battery modules 20 and the baseboard 11 may be realized, thus improving the safety of the energy storage device 100. The insulating plate is laid on the baseboard 11. The fixing segment 41 may be fixed on the baseboard 11 through the matching between the positioning protrusion 412 and the positioning hole 1121. Through the matching between the positioning protrusion 412 and the positioning hole 1121, not only the heat insulation support 40 is fixed stably on the insulating plate, but also a positioning effect can be achieved, which avoids movement of the heat insulation support 40.

The positioning structure provided in embodiments of the present application is not limited thereto. In other embodiments, a positioning hole 1121 may be defined on a fixing section 41, and a positioning protrusion 412 may be arranged on the insulating plate or the baseboard 11 correspondingly. In order to improve assembly convenience, peripheral side surfaces of the positioning protrusion 412 and/or sidewalls of the positioning hole 1121 each may be a guiding surface extending obliquely, to improve assembly guide during assembly.

As illustrated in FIG. 6 and FIG. 8, in some embodiments, the fixing groove 411 is defined on top of the fixing segment 41, and the fixing groove 411 has openings on one side of the fixing groove 411 away from the connecting segment 43 and on top of the fixing groove 411, for insertion of the cooling assembly 30.

Specifically, two mounting plates are arranged on top of the fixing segment 41, the two mounting plates define the fixing groove 411, and the cooling assembly 30 is installed in the fixing groove 411. By clamping and fixing the cooling assembly 30 at both ends of the cooling assembly 30 with the two mounting plates, not only the cooling assembly 30 may be stably fixed, but also the cooling assembly 30 may be vertically arranged in the height direction. Therefore, vertical limiting of the cooling assembly 30 may be realized, so that the cooling effect of the cooling assembly 30 on the battery modules 20 on both sides of the cooling assembly 30 is consistent. Temperature in multiple battery modules 20 may be more even, overheating on certain areas of the battery modules is avoided, and the working stability of the energy storage device 100 is improved.

The two mounting plates each have one end connected to the connecting segment 43, and a free end of one mounting plate is spaced apart from a free end of the other mounting plate, so that the top and one side of the fixing groove 411 are open, which makes the installation of the cooling assembly 30 on the heat insulation support 40 more convenient.

It may be understood that, the thickness of the two mounting plates which define the fixing groove 411 is consistent with a distance between two adjacent battery modules 20, so that the gap between two adjacent battery modules 20 may be consistent and reasonable in size. Then the uniformity of glue-pouring may be ensured, and the thickness of the glue may be more consistent.

Further, the fixing groove 411 has chamfers 413 at the openings to for assembly guiding, which makes the installation of the cooling assembly 30 on the heat insulation support 40 more convenient.

In some embodiments, two side walls of the fixing groove 411 located at both sides of the cooling assembly 30 are equal in thickness, that is, two mounting plates are equal in thickness, so that force distribution on two sides of the heat insulation support 40 in the width direction is more even. Therefore, fixing stability may be improved, and the structural strength and the stability of the heat insulation support 40 may also be improved.

As illustrated in FIG. 8, according to embodiments of the disclosure, the limiting segment 42 includes a main part 421, a first reinforcing plate 422, and two second reinforcing plates 423. The main part 421 is located between the cross beam 111 and the side board 12 of the case 10. Two ends of the main part 421 abut against the cross beam 111 and the side board 12 respectively. The main part 421 is perpendicular to the connecting segment 43. The first reinforcing plate 422 is arranged on the main part 421. The first reinforcing plate is connected to the connecting segment 43 and coplanar with the connecting segment 43. The two second reinforcing plates 423 are arranged on two sides of the first reinforcing plate 422 respectively. The two second reinforcing plates 423 each are perpendicular to the first reinforcing plate 422. The two reinforcing plates 423 are arranged symmetrically with respect to the first reinforcing plate 422.

Specifically, the main part 421 extends in the width direction of the battery modules 20. A strengthening flange may be arranged on an upper side of the main part 421, and a resisting plate extending toward the baseboard 11 may be arranged on a lower side of the main part 421, so that the main part 421 may be arranged between the cross beam 111 and the side board 12. One end of the first reinforcing plate 422 is connected to the connecting segment 43 and extends in the length direction of the battery modules 20. The two second reinforcing plates 423 are located at two sides of the first reinforcing plate 422, and extends in the width direction of the battery modules 20. The structural strength of the heat insulation support 40 may be improved, and the fixing stability and reliability of the limiting segment 42 on the baseboard 11 may be further improved.

It may be noted that, at least one cooling assembly 30 each has at least one end in the length direction of the battery modules 20 fixed in at least one fixing groove 411 of at least one heat insulation support 40. Then the cooling assembly 30 may be stably and reliably fixed in the case 10 by the heat insulation support 40.

Exemplarily, in some embodiments, the energy storage device 100 includes multiple cooling assemblies 30, and each cooling assembly 30 is arranged between two adjacent battery modules 20. The energy storage device 100 includes multiple heat insulation supports 40. Each of the multiple cooling assemblies 30 is provided with the heat insulation support 40 on each of two ends of the cooling assembly 30 in the length direction of the battery modules 20. Two ends the cooling assembly 30 in the length direction of the battery modules 20 are fixed in the fixing grooves 411 of the heat insulation supports 40. In other embodiments, as illustrated in FIG. 3, FIG. 5, and FIG. 6, the energy storage device 100 includes multiple cooling assemblies 30. A bus plate 50 is arranged on the same end of the multiple cooling assemblies 30 in the length direction of the battery modules 20. The multiple cooling assemblies 30 are connected to one another through the bus plate 50.

The multiple cooling assemblies 30 are arranged opposite to each other in the width direction of the battery modules 20. In an embodiment in which the multiple cooling assemblies 30 are arranged independently, heat insulation supports 40 are required at two ends of each cooling assembly 30. In an embodiment in which the multiple cooling assemblies 30 are connected through the bus plate 50 at one end on the same side, each heat insulation support 40 may be arranged only at an end away from the bus plate 50.

It may be understood that, the cooling assembly 30 is arranged between adjacent battery modules 20, and each battery module 20 has one side in contact with the cooling assembly 30. Therefore, the multiple battery modules 20 have similar cooling amount, which makes the temperature in the multiple battery modules 20 more even.

According to embodiments of the disclosure, the fixing segment 41, the connecting segment 43, and the limiting segment 42 are integrally formed, which raises manufacture efficiency of the heat insulation support 40, and reduces manufacture cost of the heat insulation support 40.

It may be understood that directional relationship or positional relationship indicated by terms such as "center", "longitudinal", "lateral", "length", "width", "thickness", "on", "under", "front", "back", "left", "right", "vertical", "horizontal", "top", "bottom", "in", "out", "clockwise", "anticlockwise", "axial", "radial", "circumferential", and the like is directional relationship or positional relationship based on accompanying drawings and are only for the convenience of description and simplicity, rather than explicitly or implicitly indicate that apparatuses or components referred to herein must have a certain direction or be configured or operated in a certain direction, which may not be understood as limitation on the disclosure.

In description of the disclosure, "first feature" and "second feature" may include one or more of the feature.

In description of the disclosure, "multiple" means two of more than two.

In description of the disclosure, a first feature being "on" or "under" a second feature referred to herein may refer to a direct contact between the first feature and the second feature, or an indirect contact between the first feature and the second feature via another feature.

In description of the disclosure, the first feature being "above", "over", and "on" the second feature may be the first feature being right above or obliquely above the second feature, or only refers to the first feature being at a higher horizontal level than the second feature.

The reference term "an embodiment", "some embodiments", "implementation", "specific implementation", or "some implementations" referred to herein means that a particular feature, structure, material, or characteristic described in conjunction with the embodiment or implementation may be contained in at least one embodiment or implementation of the disclosure. The phrase appearing in various places in the specification does not necessarily refer to the same embodiment or implementation. The particular feature, structure, material, or characteristic described may be properly combined in any one or more embodiments or implementations.

## Claims

1. An energy storage device, comprising:
a case (10);
a plurality of battery modules (20), wherein the plurality of battery modules are accommodated in the case (10);
at least one cooling assembly (30), wherein the at least one cooling assembly is arranged between the plurality of battery modules (20); and
at least one heat insulation support (40) fixedly connected to the case (10), wherein the at least one heat insulation support (40) each defines a fixing groove (411) configured to fix one of the at least one cooling assembly (30);
wherein the case (10) comprises:
a baseboard (11), wherein the baseboard (11) has a cross beam (111) and a longitudinal beam (112) perpendicular to the cross beam (111), the longitudinal beam (112) is parallel to a length direction of the plurality of battery modules (20), and the cross beam (111) is parallel to a width direction of the plurality of battery modules (20);
a side board (12), wherein the baseboard (11) and the side board (12) cooperatively form the case (10); and
wherein the at least one support (40) is arranged on the cross beam (111) and the longitudinal beam (112);
**characterized in that**:
each of the at least one support (40) comprises:
a fixing segment (41) located at one side of the cross beam (111) and fixed to the longitudinal beam (112), wherein the fixing groove (411) is defined on top of the fixing segment (41);
a limiting segment (42) located at the other side of the cross beam (111); and
a connecting segment (43), wherein two ends of the connecting segment (43) are connected to the fixing segment (41) and the limiting segment (42) respectively, and the connecting segment (43) is supported by the cross beam (111).

2. The energy storage device of claim 1, wherein the fixing segment (41) has a positioning protrusion (412) at bottom of the fixing segment (41), the longitudinal beam (112) defines a positioning hole (1121), and the positioning protrusion (412) is inserted into the positioning hole (1121).

3. The energy storage device of claim 1, wherein the fixing groove (411) has openings on one side of the fixing groove (411) away from the connecting segment (43) and on top of the fixing groove (411), for insertion of a cooling assembly (30).

4. The energy storage device of any one of claims 1 to 3, wherein the fixing groove (411) has chamfers (413) at the openings.

5. The energy storage device of claim 1, wherein groove walls of the fixing groove (411) on two sides of the cooling assembly (30) are equal in thickness.

6. The energy storage device of claim 1, wherein the limiting segment (42) comprises:
a main part (421) located between the cross beam (111) and the side board (12) of the case (10), wherein two ends of the main part (421) abut against the cross beam (111) and the side board (12) respectively, and the main part (421) is perpendicular to the connecting segment (43);
a first reinforcing plate (422) arranged on the main part (421), wherein the first reinforcing plate (422) is connected to the connecting segment (43) and coplanar with the connecting segment (43); and
two second reinforcing plates (423) arranged on two sides of the first reinforcing plate (422) respectively, wherein the two second reinforcing plates (423) each are perpendicular to the first reinforcing plate (422), and the two reinforcing plates (423) are arranged symmetrically with respect to the first reinforcing plate (422).

7. The energy storage device of claim 1, wherein the at least one cooling assembly (30) each has at least one end in the length direction of the battery modules (20) fixed in at least one fixing groove (411) of at least one heat insulation support (40).

8. The energy storage device of claim 7, wherein the energy storage device comprises a plurality of cooling assemblies (30), each of the plurality of cooling assemblies is arranged between two adjacent battery modules (20), the energy storage device comprises a plurality of heat insulation supports (40), each of the plurality of cooling assemblies (30) is provided with a heat insulation support (40) on each of two ends of said each of the plurality of cooling assemblies (30) in the length direction of the battery modules (20), and two ends of each of the plurality of cooling assemblies (30) in the length direction of the battery modules (20) are fixed in fixing grooves (411) of heat insulation supports (40).

9. The energy storage device of claim 7, wherein the energy storage device comprises a plurality of cooling assemblies (30), a bus plate (50) is arranged on the same end of the plurality of cooling assemblies (30) in the length direction of the battery modules (20), and the plurality of cooling assemblies (30) are connected to one another through the bus plate (50).

10. The energy storage device of claim 1, wherein the fixing segment (41), the connecting segment (43), and the limiting segment (42) are integrally formed.

## Patentansprüche

1. Energiespeichervorrichtung, umfassend:
ein Gehäuse (10);
eine Vielzahl von Batteriemodulen (20), wobei die Vielzahl von Batteriemodulen in dem Gehäuse (10) untergebracht ist; mindestens eine Kühlbaugruppe (30), wobei die mindestens eine Kühlbaugruppe zwischen der Vielzahl von Batteriemodulen (20) angeordnet ist; und
mindestens eine Wärmeisolierstütze (40), die fest mit dem Gehäuse (10) verbunden ist, wobei die mindestens eine Wärmeisolierstütze (40) jeweils eine Befestigungsnut (411) definiert, die so eingerichtet ist, dass sie eine der mindestens einen Kühlbaugruppe (30) fixiert;
wobei das Gehäuse (10) Folgendes umfasst:
ein Sockelbrett (11), wobei das Sockelbrett (11) einen Querträger (111) und einen Längsträger (112) senkrecht zu dem Querträger (111) aufweist, der Längsträger (112) parallel zu einer Längsrichtung der Vielzahl von Batteriemodulen (20) ist und der Querträger (111) parallel zu einer Breitenrichtung der Vielzahl von Batteriemodulen (20) ist;
ein Seitenbrett (12), wobei das Sockelbrett (11) und das Seitenbrett (12) zusammen das Gehäuse (10) bilden; und
wobei die mindestens eine Stütze (40) an dem Querträger (111) und dem Längsträger (112) angeordnet ist;
**dadurch gekennzeichnet, dass**:
jede der mindestens einen Stütze (40) Folgendes umfasst:
ein Befestigungssegment (41), das sich an einer Seite des Querträgers (111) befindet und an dem Längsträger (112) befestigt ist, wobei die Befestigungsnut (411) auf der Oberseite des Befestigungssegments (41) definiert ist;
ein Begrenzungssegment (42), das sich auf der anderen Seite des Querträgers (111) befindet; und
ein Verbindungssegment (43), wobei zwei Enden des Verbindungssegments (43) mit dem Befestigungssegment (41) beziehungsweise dem Begrenzungssegment (42) verbunden sind, und das Verbindungssegment (43) von dem Querträger (111) getragen wird.

2. Energiespeichervorrichtung nach Anspruch 1, wobei das Befestigungssegment (41) einen Positionierungsvorsprung (412) an der Unterseite des Befestigungssegments (41) aufweist, der Längsträger (112) ein Positionierungsloch (1121) definiert und der Positionierungsvorsprung (412) in das Positionierungsloch (1121) eingeführt ist.

3. Energiespeichervorrichtung nach Anspruch 1, wobei die Befestigungsnut (411) Öffnungen auf einer Seite der Befestigungsnut (411) entfernt von dem Verbindungssegment (43) und auf der Oberseite der Befestigungsnut (411) zum Einsetzen einer Kühlbaugruppe (30) aufweist.

4. Energiespeichervorrichtung nach einem der Ansprüche 1 bis 3, wobei die Befestigungsnut (411) an den Öffnungen Fase (413) aufweist.

5. Energiespeichervorrichtung nach Anspruch 1, wobei die Nutwände der Befestigungsnut (411) auf zwei Seiten der Kühlbaugruppe (30) gleich dick sind.

6. Energiespeichervorrichtung nach Anspruch 1, wobei das Begrenzungssegment (42) Folgendes umfasst:
ein Hauptteil (421), das sich zwischen dem Querträger (111) und dem Seitenbrett (12) des Gehäuses (10) befindet, wobei zwei Enden des Hauptteils (421) jeweils gegen den Querträger (111) und das Seitenbrett (12) anliegen, und der Hauptteil (421) senkrecht zu dem Verbindungssegment (43) ist;
eine erste Verstärkungsplatte (422), die an dem Hauptteil (421) angeordnet ist, wobei die erste Verstärkungsplatte (422) mit dem Verbindungssegment (43) verbunden und mit dem Verbindungssegment (43) koplanar ist; und
zwei zweite Verstärkungsplatten (423), die jeweils an zwei Seiten der ersten Verstärkungsplatte (422) angeordnet sind, wobei die beiden zweiten Verstärkungsplatten (423) jeweils senkrecht zu der ersten Verstärkungsplatte (422) stehen, und die beiden Verstärkungsplatten (423) symmetrisch in Bezug auf die erste Verstärkungsplatte (422) angeordnet sind.

7. Energiespeichervorrichtung nach Anspruch 1, wobei die mindestens eine Kühlbaugruppe (30) jeweils mindestens ein Ende in Längsrichtung der Batteriemodule (20) aufweist, das in mindestens einer Befestigungsnut (411) von mindestens einer Wärmeisolierstütze (40) befestigt ist.

8. Energiespeichervorrichtung nach Anspruch 7, wobei die Energiespeichervorrichtung eine Vielzahl von Kühlbaugruppen (30) umfasst, wobei jede der Vielzahl von Kühlbaugruppen zwischen zwei benachbarten Batteriemodulen (20) angeordnet ist, die Energiespeichervorrichtung eine Vielzahl von Wärmeisolierstützen (40) umfasst, wobei jede der Vielzahl von Kühlbaugruppen (30) an jedem der beiden Enden der jeder der Vielzahl von Kühlbaugruppen (30) mit einer Wärmeisolierstütze (40) in Längsrichtung der Batteriemodule (20) versehen ist, und zwei Enden jeder der Vielzahl von Kühlbaugruppen (30) in Längsrichtung der Batteriemodule (20) in Befestigungsnuten (411) von Wärmeisolierstützen (40) fixiert sind.

9. Energiespeichervorrichtung nach Anspruch 7, wobei die Energiespeichervorrichtung eine Vielzahl von Kühlbaugruppen (30) umfasst, eine Busplatte (50) an demselben Ende der Vielzahl von Kühlbaugruppen (30) in Längsrichtung der Batteriemodule (20) angeordnet ist und die Vielzahl von Kühlbaugruppen (30) durch die Busplatte (50) miteinander verbunden ist.

10. Energiespeichervorrichtung nach Anspruch 1, wobei das Befestigungssegment (41), das Verbindungssegment (43) und das Begrenzungssegment (42) integral gebildet sind.

## Revendications

1. Dispositif de stockage d'énergie, comprenant :
un boîtier (10) ;
une pluralité de modules de batterie (20), dans lequel la pluralité de modules de batterie est reçue dans le boîtier (10) ;
au moins un ensemble de refroidissement (30), dans lequel l'au moins un ensemble de refroidissement est agencé entre la pluralité de modules de batterie (20) ; et
au moins un support d'isolation thermique (40) solidaire du boîtier (10), dans lequel l'au moins un support d'isolation thermique (40) définit chacun une rainure de fixation (411) configurée pour fixer l'un de l'au moins un ensemble de refroidissement (30) ;
dans lequel le boîtier (10) comprend :
une plinthe (11), dans lequel la plinthe (11) présente une poutre transversale (111) et une poutre longitudinale (112) perpendiculaire à la poutre transversale (111), la poutre longitudinale (112) est parallèle à une direction longitudinale de la pluralité de modules de batterie (20), et la poutre transversale (111) est parallèle à une direction de largeur de la pluralité de modules de batterie (20) ;
une planche latérale (12), dans lequel la plinthe (11) et la planche latérale (12) forment coopérativement le boîtier (10) ; et
dans lequel l'au moins un support (40) est agencé sur la poutre transversale (111) et la poutre longitudinale (112) ;
**caractérisé en ce que** :
chacun de l'au moins un support (40) comprend :
un segment de fixation (41) situé d'un côté de la poutre transversale (111) et fixé à la poutre longitudinale (112), dans lequel la rainure de fixation (411) est définie au sommet du segment de fixation (41) ;
un segment de limitation (42) situé de l'autre côté de la poutre transversale (111) ; et
un segment de liaison (43), dans lequel deux extrémités du segment de liaison (43) sont reliées respectivement au segment de fixation (41) et au segment de limitation (42), et le segment de liaison (43) est supporté par la poutre transversale (111).

2. Dispositif de stockage d'énergie selon la revendication 1, dans lequel le segment de fixation (41) présente une saillie de positionnement (412) au niveau du fond du segment de fixation (41), la poutre longitudinale (112) définit un trou de positionnement (1121), et la saillie de positionnement (412) est insérée dans le trou de positionnement (1121).

3. Dispositif de stockage d'énergie selon la revendication 1, dans lequel la rainure de fixation (411) présente des ouvertures sur un côté de la rainure de fixation (411) à l'écart du segment de liaison (43) et au sommet de la rainure de fixation (411), pour l'insertion d'un ensemble de refroidissement (30).

4. Dispositif de stockage d'énergie selon l'une quelconque des revendications 1 à 3, dans lequel la rainure de fixation (411) présente des chanfreins (413) au niveau des ouvertures.

5. Dispositif de stockage d'énergie selon la revendication 1, dans lequel les parois de rainure de la rainure de fixation (411) sur deux côtés de l'ensemble de refroidissement (30) sont d'épaisseur égale.

6. Dispositif de stockage d'énergie selon la revendication 1, dans lequel le segment de limitation (42) comprend :
une partie principale (421) située entre la poutre transversale (111) et la planche latérale (12) du boîtier (10), dans laquelle deux extrémités de la partie principale (421) sont en butée contre la poutre transversale (111) et la planche latérale (12) respectivement, et la partie principale (421) est perpendiculaire au segment de liaison (43) ;
une première plaque de renforcement (422) agencée sur la partie principale (421), dans laquelle la première plaque de renforcement (422) est reliée au segment de liaison (43) et coplanaire avec le segment de liaison (43) ; et
deux secondes plaques de renforcement (423) agencées respectivement sur deux côtés de la première plaque de renforcement (422), dans lequel les deux secondes plaques de renforcement (423) sont chacune perpendiculaires à la première plaque de renforcement (422), et les deux plaques de renforcement (423) sont agencées symétriquement par rapport à la première plaque de renforcement (422).

7. Dispositif de stockage d'énergie selon la revendication 1, dans lequel l'au moins un ensemble de refroidissement (30) présente chacun au moins une extrémité dans la direction longitudinale des modules de batterie (20) fixée dans au moins une rainure de fixation (411) d'au moins un support d'isolation thermique (40).

8. Dispositif de stockage d'énergie selon la revendication **7,** dans lequel le dispositif de stockage d'énergie comprend une pluralité d'ensembles de refroidissement (30), chacun de la pluralité d'ensembles de refroidissement est agencé entre deux modules de batterie adjacents (20), le dispositif de stockage d'énergie comprend une pluralité de supports **d'isolation** thermique (40), chacun de la pluralité **d'ensembles** de refroidissement (30) est doté **d'un** support **d'isolation** thermique (40) sur chacune des deux extrémités de ladite pluralité d'ensembles de refroidissement (30) dans la direction longitudinale des modules de batterie (20), et deux extrémités de chacun de la pluralité d'ensembles de refroidissement (30) dans la direction longitudinale des modules de batterie (20) sont fixées dans des rainures de fixation (411) de supports d'isolation thermique (40).

9. Dispositif de stockage d'énergie selon la revendication **7,** dans lequel le dispositif de stockage d'énergie comprend une pluralité **d'ensembles** de refroidissement (30), une plaque de bus (50) est agencée sur la même extrémité de la pluralité d'ensembles de refroidissement (30) dans la direction longitudinale des modules de batterie (20), et la pluralité d'ensembles de refroidissement (30) sont reliés entre eux par le biais de la plaque de bus (50).

10. Dispositif de stockage d'énergie selon la revendication **1,** dans lequel le segment de fixation (41), le segment de connexion (43) et le segment de limitation (42) sont formés d'un seul tenant.
